# EUROPÄISCHE PATENTSCHRIFT

(11) **EP 0 895 943 B1**
(45) Veröffentlichungstag und Bekanntmachung des Hinweises auf die Patenterteilung: **11.04.2001**
(21) Anmeldenummer: 98114761.4
(22) Anmeldetag: 05.08.1998
(51) Int. Cl.: B65D 75/58, A61C 19/06, B65D 81/32, B65D 77/24

(54) **Vorrichtung zum Lagern und Ausbringen einer fliessfähigen Substanz**
Storing and dispensing device for a fluid substance
Dispositif de stockage et de distribution d'une substance fluide

(30) Priorität: 08.08.1997 DE 29714246 U
(43) Veröffentlichungstag der Anmeldung: 10.02.1999
(73) Patentinhaber: ESPE Dental AG, 82229 Seefeld (DE)
(72) Erfinder: Peuker, Marc, 82229 Seefeld (DE); Bertl, Mathias, 82409 Wildsteig (DE); Poschmann, Dieter, 82319 Starnberg (DE)
(74) Vertreter: Strehl Schübel-Hopf & Partner

(56) Entgegenhaltungen:
- EP-A- 0 315 693
- WO-A-96/03326
- WO-A-98/01360
- DE-A- 3 717 512
- GB-A- 1 234 573
- US-A- 3 835 834
- US-A- 4 534 509
- US-A- 4 880 111

## Beschreibung

Zum Lagern und Auftragen einer geringen Flüssigkeitsmenge ist aus WO 96/03326 eine Vorrichtung bekannt, die einen Behälter in Form einer sogenannten "Blisterpackung" aufweist. In dem von einer abziehbaren Folie verschlossenen tiefgezogenen Teil der Packung sind zwei voneinander getrennte Vertiefungen ausgebildet, von denen eine die Flüssigkeitsmenge (beispielsweise 0,2 mℓ) enthält, während in die andere, an einem Ende offene Vertiefung ein Pinsel eingelegt ist. Nach Ablösen der Folie liegen die beiden Behältervertiefungen frei, so daß der Pinsel entnommen, in die Füssigkeit eingetaucht und zum Auftragen der Flüssigkeit auf die Behandlungsstelle verwendet werden kann. Bei der Flüssigkeit handelt es sich um eine zahnmedizinische Substanz zur Anwendung in einer einzigen Zahnbehandlung.

Die bekannte Verpackung ist wegen des steifen Teils der Blisterpackung verhältnismäßig sperrig, was hinsichtlich Lagerung und Abfallmenge unerwünscht ist; die Packung ist auch in der Herstellung verhältnismäßig aufwendig und entsprechend teuer.

Ein weiterer Nachteil der bekannten Packung besteht darin, daß Pinsel und Flüssigkeit erst zugänglich werden, nachdem die flexible Folie von dem steifen Teil der Blisterpackung abgezogen ist. Die Flüssigkeit liegt dann mit einer verhältnismäßig großen Oberfläche frei. Da der steife Packungsteil leicht und wenig stabil ist, besteht bei unvorsichtiger Handhabung, beispielsweise bereits beim Entnehmen des Pinsels, die Gefahr, daß die Flüssigkeit verschüttet wird.

Aus EP-A-0 049 553 ist eine Verpackung zur getrennten Lagerung zweier flüssiger Komponenten mit in der Packung enthaltenem Mischinstrument bekannt. Die Packung besteht aus zwei am Rand miteinander versiegelten Folien, und die Trennung zwischen den beiden jeweils eine Komponente enthaltenden Behälterteilen erfolgt durch eine außen aufgesetzte Klemmleiste. Nach Entfernen der Klemmleiste lassen sich die beiden Flüssigkeiten unter Betätigung des in der Packung vorhandenen Mischinstruments miteinander vermischen. Das fertige Gemisch läßt sich durch einen an der Packung angeformten Ausbringstutzen entnehmen. Ein Auftraginstrument ist nicht gezeigt.

Aus WO-A-89/07053 ist ein weiteres Gerät zum Lagern und Auftragen einer Flüssigkeit bekannt, bei dem ein Pinsel in einem Teil einer einen Flüssigkeitsbehälter verschließenden Kappe angeordnet ist. Nach Abnehmen und Öffnen der Kappe steht der Pinsel zum Auftragen der in dem Behälter enthaltenen Flüssigkeit zur Verfügung. Diese Anordnung ist wegen der Vielzahl ihrer Einzelteile und der komplizierten Gestaltung der Kappe aufwendig und teuer. Für kleine Flüssigkeitsmengen, die in einem einmaligen Arbeitsgang verbraucht werden, kommt die Anordnung schon aus diesem Grund nicht in Betracht.

Bei einer aus DE-A-3 122 237 bekannten Verpackung handelt es sich um einen Zweikammer-Folienbehälter, wobei die eine Kammer eine Flüssigkeit und die andere einen Teil eines Pinsel enthält. Die beiden Kammern stehen immer, auch bei geschlossenem Behälter, über eine Bohrung in Verbindung, die den fest eingefügten Pinselschaft durchsetzt. Zum Öffnen der Verpackung wird der die Pinselhaare umschließende Kammerteil abgebrochen, woraufhin der restliche Behälter einen Auftragpinsel mit im Griff vorgesehenen Flüssigkeitsbehälter bildet.

DE-A-3 310 215 zeigt eine Kette von hintereinander angeordneten Folienbehältern, deren jeder eine Kammer zur Aufnahme einer Flüssigkeit und einen Griff mit einem darin untergebrachten Messer enthält. Beim Abreißen eines Behälters bewirkt das Messer im Griff des nächsten Behälters, daß die Kammer des abgerissenen Behälters aufgeschlitzt wird. Ein Auftraginstrument ist nicht vorgesehen.

Aus DE-A-3 717 512 ist ein Dreikammer-Folienbehälter mit den im ersten Teil des Anspruchs 1 angegebenen Merkmalen bekannt, bei dem die beiden Komponenten des Gemisches zunächst getrennt in übereinander liegenden Kammern enthalten sind, die unter Aufbrechen einer Verbindungsstelle in eine dritte Kammer (Mischkammer) entleert werden. Nach Mischen in dieser Kammer wird die Vorrichtung an einer eingekerbten Stelle aufgerissen.

Ähnlich handelt es sich auch bei der Anordnung nach US-A-4,534,509 um eine Mischvorrichtung, bei der zunächst die Trennung zwischen zwei Kammern gelöst wird, um die darin zunächst getrennt aufbewahrten Lösungen zu mischen, woraufhin ein weiterer Schritt erforderlich ist, um die nun zusammenhängende Mischkammer zum Ausbringen des Gemisches zu öffnen.

Auch bei den aus US-A-4,880,111 und US-A-3,835,834 bekannten Anordnungen ist nach dem Lösen einer Verbindung zwischen zwei Kammern ein weiterer Schritt, nämlich das Öffnen des Behälters am hinteren Ende eines Auftraginstruments, erforderlich, um die Substanz auszubringen.

Der Erfindung liegt die Aufgabe zugrunde, eine möglichst einfach zu handhabende Vorrichtung zum Lagern und Auftragen insbesondere geringer Mengen einer oder mehrerer fließfähiger Substanzen anzugeben.

Die erfindungsgemäße Lösung dieser Aufgabe ist in Anspruch 1 angegeben. Danach läßt sich der Behälter ohne jegliche Hilfsmittel durch Lösen der Sollbruchstelle öffnen und die in der Behälterkammer enthaltene fließfähige Substanz, bei der es sich um eine Flüssigkeit oder auch um ein Pulver handeln kann, in die Tasche zur Entnahme überführen. Gleichzeitig wirkt die erfindungsgemäße Vorrichtung als Dosiergerät zum Ausbringen und Auftragen von durch das Kammervolumen vorgegebenen Mengen der Substanz.

Gemäß Anspruch 2 erfolgt die Entnahme der Substanz vorzugsweise durch ein in der Tasche gelagertes oder vom Benutzer in die Tasche einzuführendes Auftraginstrument, das mit der Substanz benetzt oder in Berührung gebracht werden kann, ohne daß der Behälter insgesamt geöffnet wird. Vielmehr braucht das Auftragselement, nachdem es die Substanz aufgenommen hat, nur aus der Behältertasche entnommen und an den Behandlungsort geführt zu werden. Ein Verschütten der Substanz ist selbst bei unachtsamer Handhabung kaum möglich.

Die Ausgestaltung der Erfindung nach Anspruch 3 ist insofern zweckmäßig, als der lediglich aus zwei flexiblen Folien aufgebaute Behälter vom Materialeinsatz her und in der Herstellung billig ist. Bei Einsatz geeigneter Folien läßt sich eine Diffusion des Kammerinhalts mit Sicherheit vermeiden. Daher kann die Folienpackung ohne weitere Umhüllung als Primärverpackung dienen, die sich wegen ihrer flachen und verhältnismäßig großflächigen Form gut kennzeichnen läßt.

Die Ansprüche 4 bis 6 beziehen sich auf vorzugsweise Strukturen einer Tiefzieh- und einer Deckfolie.

Gemäß Anspruch 7 besteht die Trennung zwischen der die fließfähige Substanz enthaltenden Kammer und der das Auftraginstrument aufnehmenden Tasche in einer gegenseitigen Haftung der beiden Folien. Diese Maßnahme läßt sich gleichzeitig mit dem Versiegeln der Kammer nach ihrer Befüllung herstellen.

Bei geeignet gewählter Größe und Festigkeit der die Trennung zwischen Behälterkammer und -tasche bildenden Haftung zwischen den beiden Folien ist gemäß Anspruch 8 eine Sollbruchstelle vorgesehen, um bei Beginn der Benutzung einen Verbindungskanal zwischen der Kammer und der Tasche zu bilden.

Geeignete Maßnahmen zur Erzielung der Sollbruchstelle sind in den Ansprüchen 9 und 10 angegeben.

Gemäß Anspruch 11 und 12 wird die Sollbruchstelle entweder durch Druck auf die die Substanz enthaltende Behälterkammer oder durch ein in die Behältertasche einzuführendes Instrument, insbesondere das Auftraginstrument selbst, gelöst werden. Dadurch läßt sich die erfindungsgemäße Vorrichtung vom Anwender problemlos und schnell in Gebrauch nehmen.

Die in Anspruch 13 genannte Maßnahme dient dazu, die in der Kammer enthaltene Substanz möglichst sicher gegen Lichteintritt zu schützen.

Die Ausgestaltung der Erfindung nach Anspruch 14 ist insofern zweckmäßig, als das Auftraginstrument in dem Bereich, in dem es bei der Benutzung mit der aufzutragenden Substanz in Berührung gelangt, im Lagerzustand geschützt untergebracht ist. Gleichzeitig dient das Auftraginstrument nach Anspruch 15 als Dichtung der Tasche.

Bei der Gestaltung nach Anspruch 16 ergibt sich der Vorteil, daß die über die Deckfolie hinausragende Vertiefung der Tasche als Eintauchschale für das Auftraginstrument zur Verfügung steht, so daß dieses nicht immer wieder bis in die Tasche eingeführt zu werden braucht und am Schaft nicht benetzt wird. Darüberhinaus dient die den Schaft klemmende Kante der Tasche als Sicherung des Auftraginstruments gegen Herausfallen.

Die Weiterbildung der Erfindung nach Anspruch 17 ist für Substanzen geeignet, die vor Gebrauch aus zwei oder mehreren miteinander reagierenden Komponenten gemischt werden. Dabei hat die Maßnahme des Anspruchs 18 die Bedeutung, daß nach Entleerung der ersten Kammer ein Umknicken im Bereich zwischen den Kammern begünstigt wird, so daß ein Rückfließen der Substanz in die erste Kammer verhindert wird.

Die Weiterbildung der Erfindung nach Anspruch 19 und 20 führt zu einer weiteren Vereinfachung der Lagerung.

Ausführungsbeispiele der Erfindung werden nachstehend anhand der Zeichnung näher erläutert; darin zeigen
- Figur 1: und 2 eine Draufsicht bzw. eine Schnittdarstellung,
- Figur 3: eine mehrteilige Anordnung, und
- Figur 4 bis 6: den Figuren 1 bis 3 entsprechende Darstellungen einer Ausführungsform für Zweikomponenten-Substanzen.

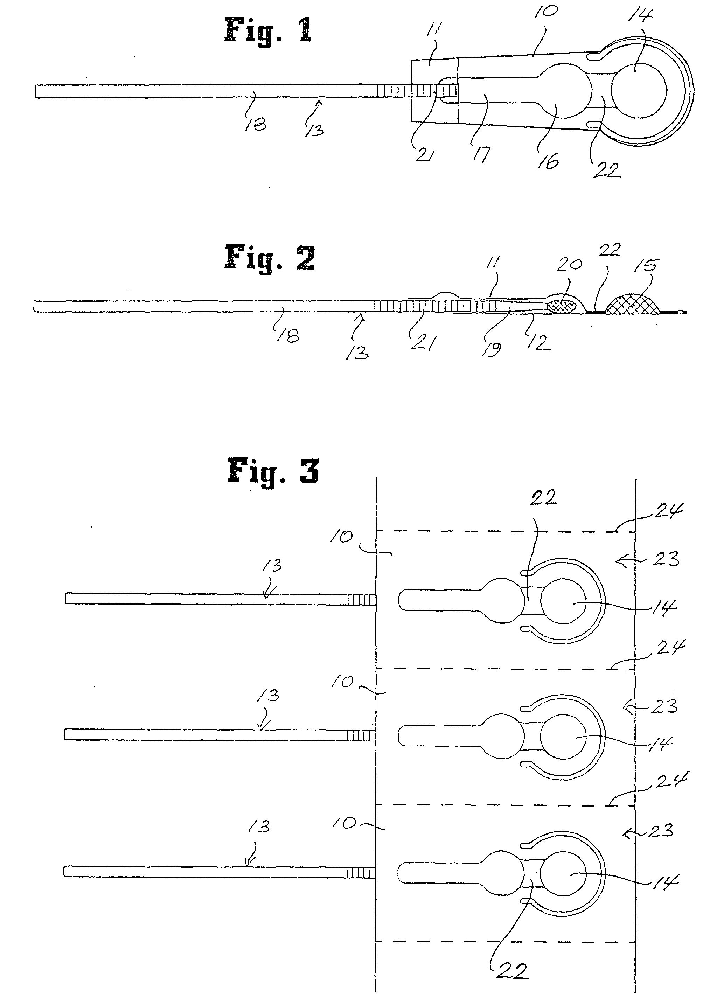

Die in Figur 1 und 2 dargestellte Lager- und Auftragvorrichtung besteht aus einem Behälter **10**, der von einer Tiefziehfolie **11** und einer Deckfolie **12** gebildet ist, und einem Auftraginstrument **13** in Form einer Bürste.

Die Folien **11, 12** sind mit Ausnahme zweier Bereiche flächig haftend miteinander verbunden. In der Tiefziehfolie **11** ist in einem dieser Bereiche eine kissenartige Vorratskammer **14** für eine fließfähige Substanz **15**, im anderen Bereich eine Tasche **16** zur Aufnahme der Bürste **13** ausgebildet. Die Tasche **16** weist einen Kanal **17** auf, der an seinem in den Figuren linken Ende von der hier kürzeren Deckfolie **12** nicht bedeckt ist. Alternativ kann der Kanal auch in der Deckfolie **12** ausgebildet sein.

Die dichte, gegenseitige Verbindung der Folien **11, 12** besteht vorzugsweise in einer Heißsiegelung oder Verklebung. Als Folien werden solche verwendet, die je nach der von der Kammer **14** aufzunehmenden Substanz **15** als Diffusionssperre wirken. Die Tiefziehfolie **11** ist aus einer Polypropylen-, einer Aluminium- und einer Polyethylenschicht, die Deckfolie **12** aus einer Polyethylenterephtalat-, einer Aluminium- und einer Polyethylenschicht aufgebaut. Bei beiden Folien kann zwischen die Aluminium- und die Polyethylenschicht noch eine Polyethylenterephtalatschicht eingefügt sein.

Die Kammer **14** und der Hauptteil der Tasche **16** können die in der Draufsicht nach Figur 1 gezeigte kreisrunde oder auch eine andere geometrische Form haben. Die Tasche **16** ist als Sacköffnung gestaltet und endet im Lagerzustand nahe der Kammer **14**. Vorzugsweise sind die Kammer **14** und die Tasche **16** relativ zueinander so angeordnet, daß die von der Tasche **16** gebildete Achse auf die Mitte der Kammer **14** weist.

Der lichte Querschnitt des Kanal **17** ist geringfügig größer als der Außendurchmesser des zylindrischen Bürstenschafts **18**, so daß dieser in dem in Figur 1 und 2 gezeigten Lagerzustand mit seinem vorderen Teil, fest in dem Kanal **17** steckt. In dem dargestellten Ausführungsbeispiel hat der Schaft **18** ein konisch zulaufendes Ende **19**, das an seiner kugelförmig verdickten Spitze **20** mit radial abstehenden Bürstenhärchen besetzt ist. Bei **21** ist der Bürstenschaft **18** am Umfangsbereich seines in den Kanal **17** eingreifenden vorderen Teils gerippt, um seine Griffigkeit zu verbessern.

In dem die Kammer **14** umgebenden Randbereich der Anordnung sind die Folien **11, 12** durch zwei in Abstand voneinander verlaufende Siegelnähte, miteinander verbunden, um die in der Kammer **14** enthaltene Substanz **15** während der Lagerung gegen Lichtzutritt zu schützen.

Die Trennung zwischen Kammer **14** und Tasche **16** ist bezüglich des Abstandes sowie bezüglich der Festigkeit der Haftung zwischen den Folien **11, 12** so gestaltet, daß sie eine Sollbruchstelle **22** bildet. Die Folien sind im Hinblick auf eine möglichst unaufwendige Herstellung auch im Bereich der Sollbruchstelle **22** mit den gleichen Mitteln miteinander verbunden wie im Außenbereich, d.h. beispielsweise heißgesiegelt oder geklebt. Bei einer Versiegelung läßt sich die Sollbruchstelle **22** dadurch ausbilden, daß mit einer anderen, insbesondere niedrigeren, Temperatur gearbeitet wird als an den übrigen Verbindungsstellen.

Eine andere Möglichkeit besteht darin, im Bereich der Sollbruchstelle **22** zwischen fest verschweißende Folien **11, 12** Peelfolienstanzlinge oder sonstige die Haftung herabsetzende Fremdpartikel einzubringen.

Alternativ kann die Sollbruchstelle **22** auch in einer gemeinsamen Prägung der Folien **11, 12**, in einem Knick, in einer Twistung (ähnlich wie bei den Enden einer Bonbonverpackung) oder in einer gemeinsamen Anwendung mehrerer dieser Maßnahmen bestehen. Ferner ist es möglich, die Trennung zwischen Kammer **14** und der Tasche **16** durch eine außen auf die Packung aufgesetzte Klammer zu erreichen, die die Folien **11, 12** im Bereich zwischen der Kammer **14** und der Tasche **16** zusammenklemmt.

Zum Gebrauch werden die beiden Folien **11, 12** im Bereich der Sollbruchstelle **22** voneinander getrennt, so daß eine Verbindung zwischen der Kammer **14** und der Tasche **16** hergestellt wird. Vorzugsweise geschieht dies durch Druck auf die kissenartige Kammer **14**, beispielsweise zwischen Daumen und Zeigefinger des Benutzers.

Dieser Druck bewirkt nicht nur das Öffnen der Sollbruchstelle **22** sondern gleichzeitig, daß sich das Kammervolumen verkleinert und die Substanz **15** durch die so geschaffene Verbindung in die Tasche **16** strömt und dabei die Spitze **20** der bereits im Lagerzustand in der Tasche **16** befindlichen oder erst zu diesem Zeitpunkt oder anschließend eingebrachten Bürste **13** benetzt.

Alternativ ist es möglich, die Bürste **13** in Richtung der Kammer **14** zu drücken und dadurch die Sollbruchstelle **22** zwischen den Folien **11, 12** zu lösen und die Bürstenspitze **20** in die fließfähige Substanz **15** einzutauchen.

Die benetzte Bürste **13** wird dann zum Auftragen der Substanz **15** an die Behandlungsstelle geführt. Zum erneuten Benetzen kann die Bürstenspitze **20** einfach in die von dem freiliegenden Ende des Kanals **17** gebildete Schale getaucht werden, ohne daß nun auch der Bürstenschaft **18** benetzt wird, sofern der Inhalt der Tasche **16** vorher in den Kanal **17** hinein gestreift wurde.

Die beschriebene Vorrichtung eignet sich insbesondere zum Lagern und Ausbringen kleiner Flüssigkeitsmengen, beispielsweise zahnmedizinischer Substanzen, die für eine einmalige Anwendung in Mengen von wenigen Zehntel Milliliter benötigt werden. In einem solchen Fall weist die Kammer **14** in dem in der Zeichnung dargestellten Ausführungsbeispiel einen Durchmesser von 10 bis 15 mm auf, und die Bürste **13** hat einen Schaftdurchmesser von etwa 2 mm mit einer die Bürstenhaare tragenden Kugelspitze **20** von beispielsweise 1 mm Durchmesser.

Bei der in Figur 3 gezeigten Ausführungsform bilden die beiden Folien **10, 11** mehrere nebeneinander angeordnete Lager- und Auftrageinheiten **23**, deren jede einen Behälter **10** mit einer eine Substanzmenge enthaltenden Kammer **14** und einer eine Bürste **13** enthaltenden Tasche **16** aufweist und die über Abreißlinien **24** zusammenhängen.

Das Ausführungsbeispiel nach Figur 1 bis 3 bezieht sich auf eine Einkomponenten-Substanz. Das Erfindungsprinzip ist auch bei Zwei- oder Mehrkomponenten-Materialien anwendbar, wobei jede Komponente in einer eigenen kissenartigen Kammer untergebracht ist.

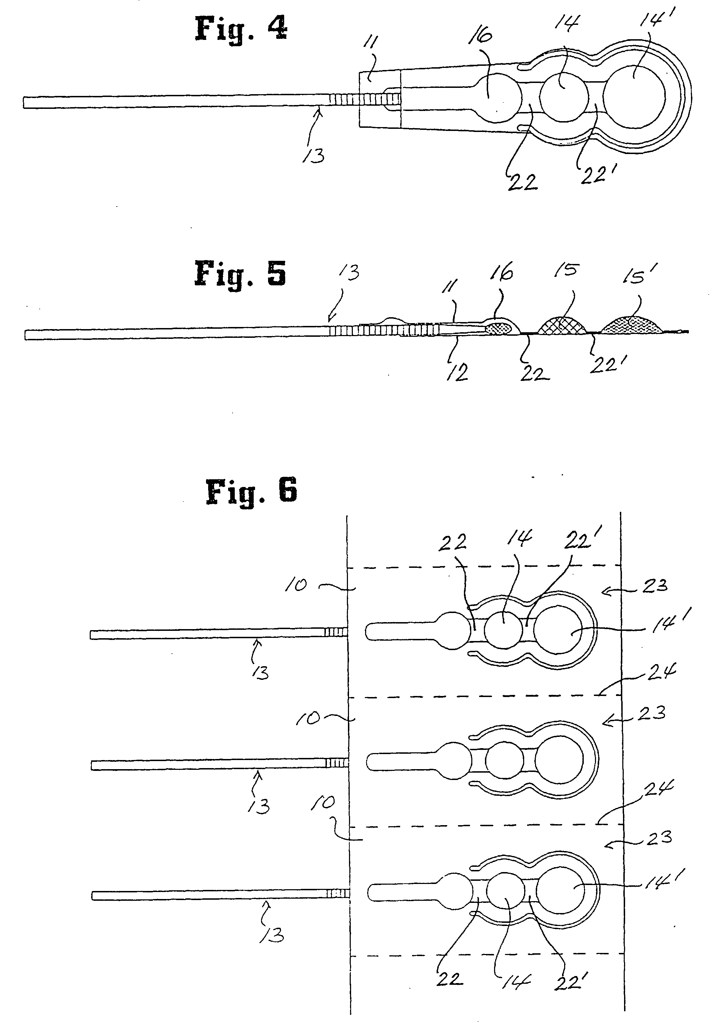

Bei der in Figur 4 bis 6 gezeigten Zweikomponenten-Version weist die Vorrichtung zwei Kammern **14, 14'** auf, die durch eine Sollbruchstelle **22'** in ähnlicher Weise voneinander getrennt sind wie die Kammer **14** von der Tasche **16**. Ähnlich wie in Figur 1 sind die Folien **11, 12** in dem beide Kammern **14, 14'** umgebenden Randbereich durch zwei in Abstand voneinander verlaufende Siegelnähte, miteinander verbunden.

Beim Gebrauch wird zunächst durch Druck auf die äußere Kammer **14'** eine Verbindung zu der Kammer **14** hergestellt, um die beiden Komponenten **15, 15'** miteinander zu vermischen. Sodann wird der die entleerte Kammer **14'** enthaltende Teil der Vorrichtung so auf die Kammer **14** geknickt, daß die Kammern **14, 14'** an der Deckfolie **12** aufeinanderliegen und nach Druck auf die Kammer **14** die Bürste **13** mit dem Flüssigkeitsgemisch benetzt wird. Damit dieser Knickvorgang an der richtigen Stelle erfolgt, sind die beiden Folien **11, 12** im Bereich zwischen den beiden Kammern **14, 14'** seitlich eingezogen. Alternativ könnten beide Kammern gleichzeitig ausgedrückt werden.

Ein zusätzlicher Mischeffekt kann vor Eröffnung der Sollbruchstelle **22** dadurch erzielt werden, daß nach Eröffnung der Sollbruchstelle **22'** Druck abwechselnd auf die Kammer **14** und die Kammer **14'** ausgeübt wird.

## Patentansprüche

1. Vorrichtung zum Lagern und Ausbringen einer fließfähigen Substanz mit einem Behälter (**10**) aus zwei Folien (**11, 12**), die unter Bildung einer Kammer (**14**) zur Aufnahme der Substanz (**15**) und einer davon getrennten weiteren Kammer (**16**) zum Ausbringen der Substanz (**15**) miteinander verbindbar sind, wobei die Trennung (**22**) zwischen den Kammern (**14, 16**) einen durch von außen aufgebrachten Druck selektiv zu öffnenden Durchgangsbereich aufweist,
dadurch **gekennzeichnet,** daß die weitere Kammer (**16**) als bereits im Lagerzustand an einem Ende nach außen offene Tasche (**16**) ausgebildet ist.

2. Vorrichtung nach Anspruch 1, wobei die Tasche (**16**) zur Aufnahme eines Auftraginstruments (**13**) ausgebildet ist.

3. Vorrichtung nach Anspruch 1 oder 2, wobei beide den Behälter (**10**) bildenden Folien (**11, 12**) flexibel sind.

4. Vorrichtung nach einem der vorhergehenden Ansprüche, wobei eine der beiden Folien eine Tiefziehfolie (**11**) ist und die andere eine Deckfolie (**12**) bildet.

5. Vorrichtung nach Anspruch 4, wobei die Tiefziehfolie (**11**) aus einer Polypropylen-, einer Aluminium- und einer Polyethylenschicht und die Deckfolie (**12**) aus einer Polyethylenterephtalat-, einer Aluminium- und einer Polyethylenschicht aufgebaut ist.

6. Vorrichtung nach Anspruch 5, wobei bei mindestens einer der beiden Folien (**11, 12**) zwischen die Aluminium- und die Polyethylenschicht eine Polyethylenterephtalatschicht eingefügt ist.

7. Vorrichtung nach einem der Ansprüche 3 bis 6, wobei die Trennung zwischen der Kammer (**14**) und der Tasche (**16**) durch gegenseitige Haftung der Folien (**11, 12**) gebildet ist.

8. Vorrichtung nach Anspruch 7, wobei der Durchgangsbereich als Sollbruchstelle (**22**) in der gegenseitigen Verbindung der beiden Folien (**11, 12**) ausgebildet ist.

9. Vorrichtung nach Anspruch 8, wobei die Folien (**11, 12**) an der Sollbruchstelle (**22**) mit einer anderen, vorzugsweise niedrigeren, Temperatur miteinander versiegelt sind als an den übrigen Stellen.

10. Vorrichtung nach Anspruch 8, wobei an der Sollbruchstelle (**22**) Fremdteilchen, vorzugsweise Peelfolienstanzlinge, zwischen die miteinander versiegelten Folien (**11, 12**) eingefügt sind.

11. Vorrichtung nach einem der Ansprüche 8 bis 10, wobei die Verbindung der Folien (**11, 12**) an der Sollbruchstelle (**22**) durch Druck auf die die Substanz (**15**) enthaltende Kammer (**14**) lösbar ist.

12. Vorrichtung nach einem der Ansprüche 8 bis 10, wobei die Verbindung der Folien (**11, 12**) an der Sollbruchstelle (**22**) durch ein in die Tasche (**16**) einzuführendes Instrument (**13**) lösbar ist.

13. Vorrichtung nach einem der vorhergehenden Ansprüche, wobei die Folien in einem die Kammer (**14**) umgebenden Bereich durch zwei in Abstand voneinander angeordnete Siegelnähte miteinander verbunden sind.

14. Vorrichtung nach einem der Ansprüche 2 bis 13, wobei das Auftraginstrument (**13**) im Lagerzustand in der Tasche (**16**) aufgenommen ist und einen aus dieser herausragenden äußeren Abschnitt aufweist.

15. Vorrichtung nach einem der Ansprüche 2 bis 14, wobei die Tasche (**16**) durch das Auftraginstrument (**13**) nach außen abgedichtet ist.

16. Vorrichtung nach Anspruch 14 oder 15, soweit diese auf Anspruch 4 rückbezogen sind, wobei die in der Tiefziehfolie (**11**) ausgebildete Tasche (**16**) mit einer über die Kante der Deckfolie (**12**) hinaus nach außen führenden Vertiefung (**17**) versehen ist.

17. Vorrichtung nach einem der vorhergehenden Ansprüche, wobei zur getrennten Aufnahme unterschiedlicher Substanzen (**15, 15'**) zwei Kammern (**14, 14'**) vorgesehen sind, die über einen selektiv zu öffnenden Durchgangsbereich (**22'**) miteinander in Verbindung zu bringen sind.

18. Vorrichtung nach Anspruch 17, wobei der Bereich zwischen den Kammern (**14, 14'**) seitlich eingezogen ist.

19. Vorrichtung nach einem der Ansprüche 2 bis 18, wobei in den beiden Folien (**11, 12**) mehrere nebeneinander angeordnete Einheiten (**23**) aus Behälter (10) und Auftraginstrument (**13**) ausgebildet sind.

20. Vorrichtung nach Anspruch 19, wobei die Einheiten (**23**) jeweils an Abreißlinien (**24**) zusammenhängen.

## Claims

1. A device for storing and dispensing a flowable substance, comprising a container (**10**) made of two sheets (**11, 12**) which are interconnectable to form a compartment (**14**) for receiving the substance (**15**) and a further compartment (**16**) separated therefrom for dispensing the substance (**15**), wherein the separation (**22**) between the compartments (**14, 16**) includes a passage area adapted to be selectively opened by externally applied pressure,
**characterised** in that the further compartment (**16**) is formed as a pocket (**16**) which is open-ended already in the storage condition.

2. The device of claim 1, wherein the pocket (**16**) is formed to receive an application instrument (**13**).

3. The device of claim 1 or 2, wherein the two sheets (**11, 12**), which form the container (**10**), are flexible.

4. The device of any preceding claim, wherein one of the two sheets is a deep-drawn sheet (**11**) and the other sheet forms a cover sheet (**12**).

5. The device of claim 4, wherein the deep-drawn sheet (**11**) is formed of a polypropylene layer, an aluminium layer, and a polyethylene layer, and the cover sheet (**12**) is formed of a polyethylene terephthalate layer, an aluminium layer, and a polyethylene layer.

6. The device of claim 5, wherein a polyethylene terephthalate layer is disposed between the aluminium layer and the polyethylene layer of at least one of the two sheets (**11, 12**).

7. The device of any one of claims 3 to 6, wherein the separation between the compartment (**14**) and the pocket (**16**) is formed by mutual adhesion of the sheets (**11, 12**).

8. The device of claim 7, wherein the passage area is formed as a pre-defined break zone (**22**) in the mutual connection between the two sheets (**11, 12**).

9. The device of claim 8, wherein the sheets (**11, 12**) are sealed together, the sealing temperature used to form the pre-defined break zone (**22**) being different from, preferably lower than, that used elsewhere.

10. The device of claim 8, wherein foreign particles, preferably chips of a peel-off film, are included between the sealed sheets at the pre-defined break zone (**22**).

11. The device of any one of claims 8 to 10, wherein the connection between the sheets (**11, 12**) in the pre-defined break zone (**22**) is adapted to be released by pressure exerted on the compartment (**14**) containing the substance (**15**).

12. The device of any one of claims 8 to 10, wherein the connection between the sheets (**11, 12**) in the pre-defined break zone (**22**) is adapted to be released by pushing an instrument (**13**) into the pocket (**16**).

13. The device of any preceding claim, wherein the sheets (**11, 12**) are interconnected in an area surrounding the compartment (**14**) by a pair of spaced sealing seams.

14. The device of any one of claims 2 to 13, wherein the application instrument (**13**) in the storage condition is received in the pocket (**16**) and includes an outer portion projecting therefrom.

15. The device of any one of claims 2 to 14, wherein the pocket (**16**) is sealed from the outside by the application instrument (**13**).

16. The device of claim 14 or 15 as dependent upon claim 4, wherein the pocket (**16**) formed in the deep-drawn sheet (**11**) is provided with a depression (**17**) which extends outwardly beyond the edge of the cover sheet (**12**).

17. The device of any preceding claim, wherein two compartments (**14, 14'**) are provided for receiving different substances (**15, 15'**), the compartments being interconnectable by a passage area (**22'**) which is adapted to be selectively opened.

18. The device of claim 17, wherein the area between the compartments (**14, 14'**) is of a reduced lateral width.

19. The device of any one of claims 2 to 18, wherein a plurality of juxtaposed units **(23)** each constituted by a container (**10**) and an application instrument **(13)** are formed in the two sheets **(11, 12),**

20. The device of claim 19, wherein the units (**23**) are interconnected along tear-off lines (**24**).

## Revendications

1. Dispositif pour stocker et délivrer une substance fluide, comportant un récipient (10) formé de deux feuilles (11, 12), qui peuvent être reliées entre elles en formant une chambre (14) servant à loger la substance (15) et une autre chambre (16), séparée de la précédente et servant à délivrer la substance (15), la séparation (22) entre les chambres (14, 16) possédant une zone de passage devant être ouverte sélectivement sous l'effet d'une pression appliquée de l'extérieur,
caractérisé en ce que l'autre chambre (16) est agencée sous la forme d'une poche (16) qui déjà à l'état stocké, est ouverte vers l'extérieur à une extrémité.

2. Dispositif selon la revendication 1, dans lequel la poche (16) est agencée de manière à loger un instrument d'application (13).

3. Dispositif selon la revendication 1 ou 2, dans lequel les deux feuilles (11, 12), qui forment le récipient (01), sont flexibles.

4. Dispositif selon l'une des revendications précédentes, dans lequel l'une des deux feuilles est une feuille emboutie (11) et l'autre forme une feuille de revêtement (12).

5. Dispositif selon la revendication 4, dans lequel la feuille la feuille emboutie (11) est formée par une couche de polypropylène, une couche d'aluminium et une couche de polyéthylène et la feuille de revêtement (12) est formée par une couche de téréphtalate de polyéthylène, d'une couche d'aluminium et une couche de polyéthylène.

6. Dispositif selon la revendication 5, dans lequel, dans l'une au moins des deux feuilles (11, 12), une feuille de téréphtalate de polyéthylène est insérée entre la couche d'aluminium et la couche de polyéthylène.

7. Dispositif selon l'une des revendications 3 à 6, dans lequel la séparation entre la chambre (14) et la poche (16) est formée par l'adhérence réciproque des feuilles (11, 12).

8. Dispositif selon la revendication 7, dans lequel la zone de passage est agencée sous la forme d'une zone de rupture de consigne (22) dans la liaison réciproque des deux feuilles (11, 12).

9. Dispositif selon la revendication 8, dans lequel les feuilles (11, 12) sont scellées entre elles au niveau du point de rupture de consigne (22) avec une autre température, de préférence une température plus basse qu'au niveau des autres emplacements.

10. Dispositif selon la revendication 8, dans lequel des particules étrangères, de préférence des pièces découpées de feuilles de pelage, sont insérées, au niveau du point de rupture de consigne (22), entre les feuilles (11, 12) scellées entre elles.

11. Dispositif selon l'une des revendications 8 à 10, dans lequel la liaison des feuilles (11, 12) au niveau du point de rupture de consigne (22) peut être supprimée sous l'effet de l'application d'une pression à la chambre (14) contenant la substance (15).

12. Dispositif selon l'une des revendications 8 à 10, dans lequel la liaison des feuilles (11, 12) au niveau du point de rupture de consigne (22) peut être supprimée au moyen d'un instrument (13) devant être introduit dans la poche (16).

13. Dispositif selon l'une des revendications précédentes, dans lequel les feuilles sont reliées entre elles dans une zone entourant la chambre (14), au moyen de deux cordons de scellement qui sont situés distance l'un de l'autre.

14. Dispositif selon l'une des revendications 2 à 13, dans lequel à l'état stocké l'instrument d'application (13) est logé dans la poche (16) et possède une partie extérieure qui ressort de cette poche.

15. Dispositif selon l'une des revendications 2 à 14, dans lequel la poche (16) est fermée de façon étanche vis-à-vis de l'extérieur par l'instrument d'application (13).

16. Dispositif selon la revendication 14 ou 15, ces revendications étant rapportées à la revendication 4, dans lequel la poche (16) formée dans la feuille emboutie (11) est pourvue d'un renfoncement (17), qui s'étend vers l'extérieur au-delà du bord de la feuille de revêtement (12).

17. Dispositif selon l'une des revendications précédentes, dans lequel pour le logement séparé de différentes substances (15, 15'), il est prévu deux chambres (14, 14'), qui doivent être reliées entre elles au moyen d'une zone de passage (22') devant être ouverte de façon sélective.

18. Dispositif selon la revendication 17, dans lequel la partie entre les chambres (14, 14') est rétrécie latéralement.

19. Dispositif selon l'une des revendications 2 à 18, dans lequel plusieurs unités (23) disposées côte-à-côte et constituées par un récipient (10) et un instrument d'application (13) sont formées dans les deux feuilles (11, 12).

20. Dispositif selon la revendication 19, dans lequel les unités (23) sont réunies respectivement au niveau de lignes d'arrachement (24).
